# EUROPEAN PATENT APPLICATION

(11) **EP 4 667 387 A1**
(43) Date of publication of application: **24.12.2025**
(21) Application number: 25166330.8
(22) Date of filing: 26.03.2025
(51) Int. Cl.: B65G 1/04

(54) **HOOK MECHANISM AND PICKING AND PLACING DEVICE**

(30) Priority: 21.06.2024 CN 202410817188
(71) Applicant: Hai Robotics Co., Ltd., Shenzhen, Guangdong 518000 (CN)
(72) Inventor: NING, Kejun, Shenzhen, Guangdong, 518000 (CN)
(74) Representative: Gulde & Partner

(57) **Abstract**

The present disclosure provides a hook mechanism and a picking and placing device, and relates to the field of warehouse logistics technologies. The hook mechanism is used for picking and placing a container. The hook mechanism includes a carrier, a driving component, and two hook pieces. The driving component is disposed on the carrier. The two hook pieces are disposed at an interval along a first direction. The driving component is configured to drive at least two hook pieces to be respectively raised or lowered relative to the carrier, so that one drive can control two different hook pieces separately to pick and place the container in different directions, thereby simplifying a structure of the hook mechanism.

## Description

### TECHNICAL FIELD

The present disclosure relates to the field of warehouse logistics technologies, and in particular, to a hook mechanism, a picking and placing device, a robot, a warehouse system, and a picking and placing method.

### BACKGROUND OF THE INVENTION

With the development of artificial intelligence and automated technologies, robots are widely applied to the field of warehouse logistics, and are used for picking and placing, shipping, and sorting goods. In a logistics system, racks are usually used to store goods. A robot with a corresponding function is connected to a rack, a conveying line, or the like to pick and place the goods or complete a goods transportation task.

In a related technology, the robot is usually provided with a fork for picking and placing the goods. The fork is usually provided with a mechanical hand that can extend and contract relative to a body of the robot toward a fixed orientation. The mechanical hand usually has multiple joints, multiple groups of transmission mechanisms, and multiple drive units, so that the mechanical hand can extend into the rack to complete an operation of picking and placing a container.

However, currently, a picking mechanism on a robot has a complex structure, a heavy weight, and high costs.

### SUMMARY OF THE INVENTION

The present disclosure provides a hook mechanism, a picking and placing device, a robot, a warehouse system, and a picking and placing method, to at least partially resolve at least one of current technical problems of a complex structure, a heavy weight, and high costs of a picking mechanism on the robot.

According to a first aspect, the present disclosure provides a hook mechanism. The hook mechanism is used to pick and place a container.

The hook mechanism includes a carrier, a driving component, and two hook pieces. The driving component is disposed on the carrier. The two hook pieces are disposed at two ends of the driving component at an interval along a first direction. The driving component is configured to simultaneously drive the two hook pieces to move asynchronously, so as to be respectively raised or lowered relative to the carrier.

According to the hook mechanism provided in the present disclosure, the driving component drives the two hook pieces to move asynchronously, so that one drive can control two different hook pieces separately to pick and place the container in different directions, thereby simplifying a structure of the hook mechanism.

In an optional implementation, the hook mechanism further includes a swing bar. The swing bar is fixedly connected to an output end of the driving component. The hook piece has a sliding slot, and the swing bar is at least partially located in the sliding slot; and the driving component is configured to drive the swing bar to rotate, so that the swing bar drives the hook piece to move.

In an optional implementation, the swing bar has a sliding portion. The sliding portion is inserted into the sliding slot. The sliding portion is spaced from a rotation center of the swing bar.

In this way, when the swing bar rotates, the sliding portion may push the hook piece to move, thereby improving reliability of connection between the swing bar and the hook piece.

In an optional implementation, the hook mechanism further includes a housing. The housing is disposed on the carrier. The driving component and the two hook pieces are disposed in the housing. The housing has a guide slot. The two hook pieces are movable along the guide slot, so that the two hook pieces are retracted into the housing, or at least one of the two hook pieces partially extends out of the housing.

In this way, position limiting and guidance may be provided for movement of the hook piece, thereby improving smoothness of the movement of the hook piece.

In an optional implementation, the hook piece can include a connection portion and a hook portion; the connection portion is connected to the hook portion, and the sliding slot is disposed at the connection portion; the hook portion is disposed through the guide slot; an outer side of the container has a catching slot; and the hook portion is at least partially inserted into the catching slot when the hook piece is abutted with the container.

In this way, reliability of connection between the hook piece and the container can be improved.

In an optional implementation, there are at least two hook portions, and the at least two hook portions are distributed at an interval along a length direction of the connection portion.

In this way, a plurality of hook portions may be simultaneously abutted with the container, thereby improving balance of force-bearing on the container when the hook piece is abutted with the container.

In an optional implementation, a side wall of the guide slot has a position limiting protrusion, and a side wall of the hook portion is provided with a groove; and the position limiting protrusion is located in the groove when the hook portion moves along the guide slot.

In this way, it can be avoided that the hook portion shakes when the hook portion moves along the guide slot.

In an optional implementation, the driving component includes a first driving unit and a rotation axis, and the first driving unit is configured to drive the rotation axis to rotate; the rotation axis extends along the first direction; the two hook pieces are fixedly connected to two ends of the rotation axis; and projections of the two hook pieces on a plane perpendicular to the first direction extend along different directions, and/or an angle between the projections of the two hook pieces on the plane perpendicular to the first direction is 60°-180°.

In an optional implementation, there may be two swing bars, and the two swing bars are respectively disposed corresponding to the two hook pieces.

In this way, when the driving component drives the two swing bars to rotate, the two hook pieces have different telescopic positions relative to the housing, thereby satisfying requirements of connection between the hook piece and the container when goods are picked and placed in different directions.

In an optional implementation, the driving component may include a first driving unit and a driving axis. The first driving unit is disposed on the carrier, and the driving axis extends along the first direction; the first driving unit is configured to drive the driving axis to rotate; and the two swing bars are both fixedly connected to the driving axis.

In this way, the plurality of hook pieces may be driven through the driving axis to cooperate with each other, thereby simplifying a driving structure of the hook mechanism.

In an optional implementation, the two swing bars are connected at two ends of the driving axis, and projections of the two swing bars on a plane perpendicular to the first direction have an angle.

In an optional implementation, the angle of the projections of the two swing bars on the plane perpendicular to the first direction is 90°.

In an optional implementation, the driving component may also include a first gear and a second gear, the first gear is connected to an output end of the first driving unit, and the second gear is coaxially connected to the driving axis; and the first gear is in mesh with the second gear.

In this way, layout compactness of the driving component can be improved, and space occupation can be reduced.

According to a second aspect, the present disclosure provides a picking and placing device. The picking and placing device includes a device body, a telescopic mechanism, and the hook mechanism in the above technical solution. The telescopic mechanism is disposed on the device body and is telescopic relative to the device body along a first direction, and the hook mechanism is connected to the telescopic mechanism.

In an optional implementation, the device body may include a fixed base plate, a first transmission piece, a first transmission wheel, a driving wheel, and a second driving unit; the second driving unit is disposed on the fixed base plate; and there are at least two first transmission wheels, the at least two first transmission wheels are respectively disposed at two ends of the fixed base plate along a moving direction of the telescopic mechanism, the driving wheel is connected to an output end of the second driving unit, and the first transmission piece is sequentially disposed around the first transmission wheel and the driving wheel that are at two ends of the fixed base plate.

The telescopic mechanism is connected to the first transmission piece. The second driving unit is configured to drive the driving wheel to rotate. The driving wheel drives the first transmission piece to transmit, so that the first transmission piece drives the telescopic mechanism to move relative to the fixed base plate.

In this way, bidirectional telescopic movement of the telescopic mechanism relative to the device body can be implemented.

In an optional implementation, the telescopic mechanism may include a telescopic piece, a second transmission piece, and at least two second transmission wheels, and the at least two second transmission wheels are respectively disposed at two ends of the telescopic piece along a moving direction of the hook mechanism; and the second transmission piece is disposed around the at least two second transmission wheels.

The second transmission piece has a connection point to the fixed base plate; the hook mechanism is connected to the second transmission piece; and a connection location between the hook mechanism and the second transmission piece and a connection location between the fixed base plate and the second transmission piece are respectively located at opposite sides of the second transmission piece.

In this way, the hook mechanism may cooperate with the telescopic mechanism and be driven through the telescopic movement of the telescopic mechanism, thereby simplifying a driving structure of the picking and placing device, and reducing the weight and costs of the picking and placing device.

In an optional implementation, a connection point between the hook mechanism and the second transmission piece is located between two hook pieces.

In this way, during picking and placing, the catching slot can be prevented from getting out of a cross beam of a rack too much, thereby preventing the container from getting out of the cross beam too much at a position at which the container is placed on the rack.

In an optional implementation, the first transmission piece and the first transmission wheel are located on a first side in a width direction of the picking and placing device; the second transmission piece and the second transmission wheel are located on a second side in the width direction of the picking and placing device; and a connection piece is provided on a side of the carrier facing the second transmission piece, and the connection piece is connected to the second transmission piece.

In this way, space of two sides of the picking and placing device can be fully used, thereby improving reasonableness of the layout of the transmission structure.

According to a third aspect, the present disclosure provides a robot. The robot includes a robot body and the picking and placing device in the above technical solution, and the picking and placing device is connected to the robot body.

According to a fourth aspect, the present disclosure provides a warehouse system. The warehouse system includes a rack and the robot in the above technical solution. The robot is configured to move along the ground, and/or the robot is configured to abut with a rack, and climb and move along a height direction of the rack.

According to a fifth aspect, the present disclosure provides a picking and placing method applied to a robot. The robot includes a picking and placing device. The picking and placing device includes a device body, a telescopic mechanism, and a hook mechanism. The telescopic mechanism is disposed on the device body and is telescopic relative to the device body. The hook mechanism is connected to the telescopic mechanism; the hook mechanism includes a carrier, a driving component, and two hook pieces, the driving component is disposed on the carrier, and the two hook pieces are disposed at two ends of the driving component at an interval along a first direction; the driving component is configured to simultaneously drive the two hook pieces to move asynchronously so as to be respectively raised or lowered relative to the carrier; and the robot is configured to pick and place a container, and two ends of a bottom side of the container have catching slots.

The method includes:
receiving a picking instruction, controlling the robot to drive to a target picking position, and driving the telescopic mechanism to extend, so that the hook mechanism moves to a position below a target container along with the telescopic mechanism, and the hook piece of a first end of the hook mechanism is opposite to a catching slot of the target container;
driving the hook piece of the first end of the hook mechanism to move toward the target container, to abut with a catching slot of a second end of the target container, where the first end of the hook mechanism is an end close to a target picking position, and the second end of the target container is an end close to an opening side of the target picking position; and
driving the telescopic mechanism in a reverse direction, so that the hook mechanism drives the target container to the picking and placing device.

In an optional implementation, the picking and placing method further includes:
receiving a placing instruction, and controlling the robot to carry the target container to a target placing position, where the target picking position and the target placing position respectively face two sides of the picking and placing device along the first direction;
driving the hook mechanism to move away from the target placing position, and enabling the hook piece of the second end of the hook mechanism to abut with a catching slot of a first end of the target container;
driving the telescopic mechanism toward the target placing position, enabling the hook mechanism to move toward the target placing position along with the telescopic mechanism, and driving the target container to the target placing position; and
exiting the hook piece from the catching slot; and driving the telescopic mechanism in the reverse direction, so that the hook mechanism is retracted into the picking and placing device along with the telescopic mechanism.

The present disclosure provides a hook mechanism, a picking and placing device, a robot, a warehouse system, and a picking and placing method. The hook mechanism is used for picking and placing a container. The hook mechanism includes a carrier, a driving component, and two hook pieces. The driving component is disposed on the carrier. The two hook pieces are disposed at two ends of the driving component at an interval along a first direction; and the driving component is configured to drive the two hook pieces to move asynchronously so as to be respectively raised or lowered relative to the carrier, and one drive can control two different hook pieces separately to pick and place the container in different directions, thereby simplifying a structure of the picking and placing device, and reducing the weight and costs of the picking and placing device.

In addition to the technical problems resolved by the foregoing embodiments of the present disclosure, the technical features constituting the technical solutions, and the beneficial effects brought by the technical features of the technical solutions, other technical problems, other technical features included in the technical solutions, and the beneficial effects brought by the technical features that can be resolved by the hook mechanism, the picking and placing device, the robot, the warehouse system, and the picking and placing method provided in the present disclosure are further described in detail in specific implementations.

### BRIEF DESCRIPTION OF DRAWINGS

To describe the technical solutions in the embodiments of the present disclosure or in the existing technology more clearly, the following briefly describes the accompanying drawings required for describing the embodiments or the existing technology. Apparently, the accompanying drawings in the following description show some embodiments of the present disclosure, and a person of ordinary skill in the art may still derive other drawings from these accompanying drawings without creative efforts.
FIG. 1 is a first schematic structural diagram of a picking and placing device according to an embodiment of the present disclosure;
FIG. 2 is a second schematic structural diagram of a picking and placing device according to an embodiment of the present disclosure;
FIG. 3 is a first schematic structural diagram of a hook mechanism in a picking and placing device according to an embodiment of the present disclosure;
FIG. 4 is an internal structure view of a hook mechanism in a picking and placing device according to an embodiment of the present disclosure;
FIG. 5 is a schematic structural diagram of a container picked and placed by a picking and placing device according to an embodiment of the present disclosure;
FIG. 6 is a second schematic structural diagram of a hook mechanism in a picking and placing device according to an embodiment of the present disclosure;
FIG. 7 is a third schematic structural diagram of a hook mechanism in a picking and placing device according to an embodiment of the present disclosure;
FIG. 8 is a fourth schematic structural diagram of a hook mechanism in a picking and placing device according to an embodiment of the present disclosure;
FIG. 9 is a schematic structural diagram of a robot according to an embodiment of the present disclosure;
FIG. 10 is a schematic structural diagram of a warehouse system according to an embodiment of the present disclosure;
FIG. 11 is a schematic diagram of a picking process of a picking and placing device according to an embodiment of the present disclosure;
FIG. 12 is a flowchart of a picking method according to an embodiment of the present disclosure;
FIG. 13 is a schematic diagram of a placing process of a picking and placing device according to an embodiment of the present disclosure; and
FIG. 14 is a flowchart of a placing method according to an embodiment of the present disclosure.

### Description of the reference signs:

10-picking and placing device;
100-device body; 110-fixed base plate; 120-first transmission piece; 130-first transmission wheel; 140-driving wheel; 150-second driving unit; 160-first guide track; 170-guide wheel;
200-telescopic mechanism; 210-telescopic piece; 220-second transmission piece; 230-second transmission wheel; 240-second guide track;
300-hook mechanism; 301-carrier; 310-housing; 311-guide slot; 312-position limiting protrusion; 320-driving component; 321-first driving unit; 322-driving axis; 323-first gear; 324-second gear; 325-support bearing; 330-swing bar; 331-sliding portion; 340-hook piece; 341-sliding slot; 342-connection portion; 343-hook portion; 3431-groove; 350-connection piece; 360-rotation axis;
20-container; 21-catching slot;
30-robot body;
40-rack.

### DETAILED DESCRIPTION

To make objectives, technical solutions, and advantages of embodiments of the present disclosure clearer, the following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

First, a person skilled in the art should understand that the implementations are merely used for explaining the technical principles of the present disclosure, and are not intended to limit the protection scope of the present disclosure. A person skilled in the art may make adjustments to be suitable for specific application scenarios as needed.

In addition, it should be noted that, in the description of the present disclosure, terms such as "upper", "lower", "left", "right", "front", "rear", "inner", and "outer" that indicate directions or position relationships are based on directions or position relationships shown in the accompanying drawings. This is merely for ease of description, and does not indicate or imply that a device or member needs to have a specific orientation, and is constructed and operated in a specific orientation, and therefore cannot be understood as a limitation to the present disclosure.

In descriptions of this specification, descriptions with reference to terms such as "an embodiment", "some embodiments", "exemplary embodiments", "examples", "specific examples", or "some examples" mean that a specific feature, structure, material, or characteristic described with reference to the embodiment or example is included in at least one embodiment or example of the present disclosure. In this specification, schematic descriptions of the foregoing terms do not necessarily refer to a same embodiment or example. In addition, the described specific features, structures, materials, or characteristics may be combined in a proper manner in any one or more of the embodiments or examples.

In this application, terms "installation" or "connection" may be used interchangeably. The "connection" may be a direct connection, or may be an indirect connection by using an intermediate piece. The connection may be an active connection, or may be a fixed connection. The term "and/or" includes any combination of the listed items. For example, "A and/or B" includes three cases of "A and B", "only A", or "only B".

Various types of robots are widely applied to various fields such as industry and daily life. The robot plays an important role in industries such as transportation and logistics. In a warehouse and logistics system, goods are usually stored by using a rack, and the robot may pick and place the goods by abutting with the rack or a conveying line, and may transport the goods. A robot used for picking and placing goods may move in lanes between racks. The robot is usually provided with a fork for picking and placing the goods. The fork is usually provided with a mechanical arm that may extend in a fixed direction relative to a body of the robot, and the entire fork may rotate relative to the body of the robot. The mechanical arm usually completes a picking and placing operation on a side of the robot along a forward direction.

Therefore, in the related technology, when executing a goods transportation task, when performing the picking and placing operation from different sides of a transport robot, the robot first needs to rotate a position of the fork, so that the fork faces a target rack, and then a telescopic operation can be performed to pick and place the goods. Consequently, efficiency of picking and placing by the robot is relatively low. The fork usually has a plurality of joints, a plurality of groups of transmission mechanisms, and a plurality of driving units. The mechanical arm may extend into a rack storage location to complete an operation of picking and placing the container. Consequently, the fork on the robot has a complex structure, a heavy weight, and high costs.

In addition, when the fork of the robot picks and places the container, the joints of the fork need to extend into the rack storage location, which occupies storage space inside the storage location. Consequently, warehouse density is reduced, and overall space utilization of the warehouse system is reduced.

In view of the foregoing problem, the embodiments of the present disclosure provide a hook mechanism, a picking and placing device, a robot, a warehouse system, and a picking and placing method. By designing structures of the hook mechanism and the telescopic mechanism on the picking and placing device, a fork device is telescopic, both backwards and forwards. The hook mechanism does not need to extend into the rack storage location when being abutted with the container, thereby improving space utilization and warehouse efficiency. The structure of the picking and placing device is simplified, the weight of equipment is reduced, and the product costs are reduced.

For ease of understanding, first, application scenarios of the hook mechanism, the picking and placing device, the robot, the warehouse system, and the picking and placing method provided in the embodiments of the present disclosure are described.

The picking and placing device provided in the embodiments of the present disclosure is applied to the robot. The robot may be applied to the warehouse system and is used for picking and placing the goods. Specifically, the robot may be applied to different fields such as logistics delivery of an industrial production line, outbound and inbound of a manufactured inventory product, outbound and inbound of a retail product, or outbound and inbound of an express product of e-commerce logistics, and a product or goods related to transportation may be an industrial part, an electronic accessory or product, medicine, a clothing accessory, food, a book, or the like. The robot may directly transfer the goods, or may transfer a container (container) filled with the goods. This is not specifically limited in the embodiments of the present disclosure. A "container" is used to refer to a to-be-transported object of the transport robot below, and is not specifically used as an example. In an embodiment, the robot may walk on the ground. In another embodiment, the robot may also climb onto the rack to pick and place the goods. In some other embodiments, the robot may also walk on a guide track disposed on the rack.

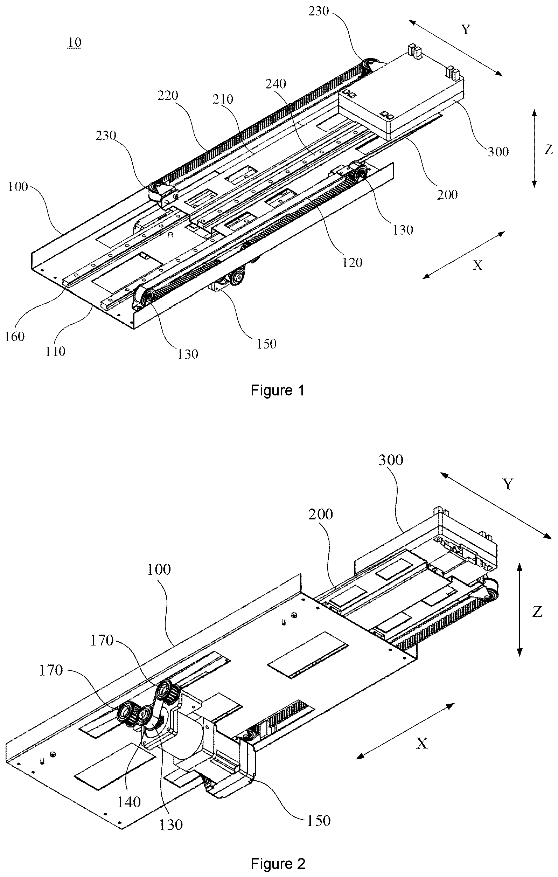

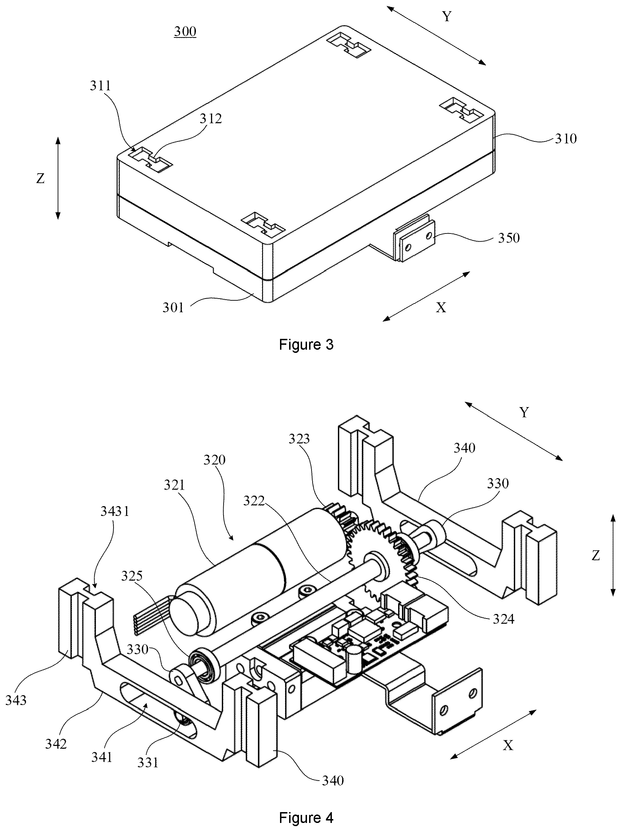

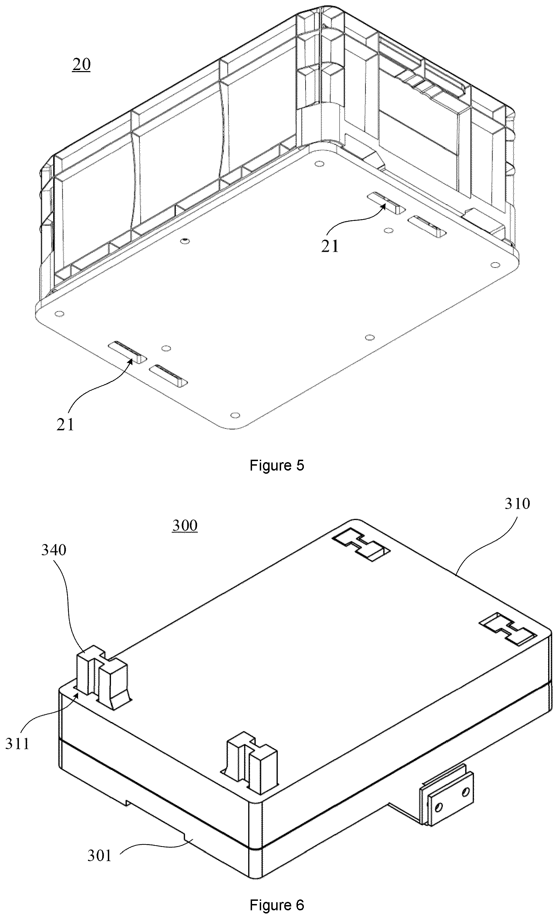

FIG. 1 is a first schematic structural diagram of a picking and placing device according to an embodiment of the present disclosure; FIG. 2 is a second schematic structural diagram of a picking and placing device according to an embodiment of the present disclosure; FIG. 3 is a first schematic structural diagram of a hook mechanism in a picking and placing device according to an embodiment of the present disclosure; FIG. 4 is an internal structural view of a hook mechanism in a picking and placing device according to an embodiment of the present disclosure; and FIG. 5 is a schematic structural diagram of a container picked and placed by a picking and placing device according to an embodiment of the present disclosure.

As shown in FIG. 1 to FIG. 5, this embodiment provides a hook mechanism 300. The hook mechanism 300 may be applied to a picking and placing device 10 and is used to pick and place a container 20. The picking and placing device 10 picks the container 20 from a rack 40, or places the container 20 on the rack 40. The rack 40 may include one or more shelves for placing the container 20, and the shelves are provided with multiple storage locations for placing the container 20. Shapes and structures of the shelves and the storage locations are not limited in this application, provided that the container 20 can be placed at the storage location of the shelf.

The hook mechanism 300 includes a carrier 301, a driving component 320, and two hook pieces 340. The driving component 320 is disposed on the carrier 301, and the two hook pieces 340 are disposed at two ends of the driving component 320 at an interval along a first direction. The driving component 320 is configured to simultaneously drive the two hook pieces 340 to move asynchronously, so as to be respectively raised or lowered relative to the carrier 301. In this way, at least one of the two hook pieces 340 is abutted with the container 20, or both of the two hook pieces 340 are separated from the container 20.

The asynchronous motion refers to a non-synchronous motion. In the embodiments of the present disclosure, motion directions of the two hook pieces 340 at a same time point are different. Even if at some particular time points, heights of the two hook pieces 340 are the same, motion directions of the two hook pieces 340 are also different. For example, one of the two hook pieces 340 is raised, and the other one of the two hook pieces 340 is lowered.

It may be understood that the driving component 320 drives the two hook pieces 340 to move asynchronously, so that one drive can control two different hook pieces separately to pick and place the container in different directions, thereby simplifying a structure of the hook mechanism.

It may be understood that, the hook mechanism 300 is jointly and cooperatively connected to the two hook pieces 340. When the driving component 320 drives the hook pieces 340 to move, during picking, the hook piece 340 at one end close to a picking position is configured to jointly and cooperatively connect to the container 20, and during placing, the hook piece 340 at one end distant from a placing position is configured to jointly and cooperatively connect to the container 20. In this way, the hook mechanism 300 does not need to penetrate into an interior of the rack, which helps simplify the structure of the hook mechanism 300, and improves warehouse density of the rack.

In some embodiments, the hook mechanism 300 may further include a swing bar 330, and the swing bar 330 is fixedly connected to an output end of the driving component 320. The hook piece 340 has a sliding slot 341, and the swing bar 330 is at least partially located in the sliding slot 341. The driving component 320 is configured to drive the swing bar 330 to rotate. In a process of rotating the swing bar 330, the swing bar 330 may drive the hook piece 340 to be raised or lowered relative to the carrier 301, so that the hook piece 340 is abutted with or separated from the container 20.

It may be understood that a swing travel of the swing bar 330 corresponds to a movement travel of the hook piece 340. By means of rotation of the swing bar 330, the hook piece 340 can be raised and lowered relative to the carrier 301. When the hook piece 340 is raised relative to the carrier 301, the hook piece 340 may be abutted with the container 20, to drive the container 20 to move when the hook mechanism 300 moves. When the hook piece 340 is lowered relative to the carrier 301, the hook piece 340 may be separated from the container 20, so that the movement of the hook mechanism 300 does not drive the container 20 to move. Using a picking process as an example, the hook mechanism 300 may move to one end toward the container 20 and opposite to the container 20. Therefore, before the hook mechanism 300 reaches a preset position relative to the container 20, the hook piece 340 of the hook mechanism 300 is in a lowered position or a retracted state relative to the carrier 301. After the hook mechanism 300 reaches the preset position, the driving component 320 may drive the swing bar 330 to rotate. The swing bar 330 drives the hook piece 340 to move during rotation. In this way, the hook piece 340 is raised relative to the carrier 301, thereby connecting the hook piece 340 to the container 20. Subsequently, the hook piece 340 may drive the container 20 to move, to obtain the container 20.

During placing, the hook piece 340 is in an extended state relative to the carrier 301, so that the hook piece 340 is abutted with the container 20, and drives the container 20 to move to the rack. After placing is completed, the swing bar 330 rotates under driving of the driving component 320, and drives the hook piece 340 to be lowered relative to the carrier 301 to move from the extended state to the retracted state. In this way, the hook piece 340 is separated from the container 20.

In some embodiments, the hook mechanism 300 further includes a housing 310. The housing 310 is disposed on the carrier 301. The driving component 320 and the two hook pieces 340 are disposed in the housing 310.

A specific driving manner of the hook piece 340 is described in detail below.

Still referring to FIG. 1 to FIG. 5, in a possible implementation, the swing bar 330 has a sliding portion 331, the sliding portion 331 is inserted into a sliding slot 341, and the sliding portion 331 is spaced from a rotation center of the swing bar 330. When the swing bar 330 rotates, the sliding portion 331 may push the hook piece 340 to move, thereby improving reliability of connection between the swing bar 330 and the hook piece 340. When the sliding portion 331 pushes the hook piece 340 to move, the sliding portion 331 moves along the sliding slot 341, so that the hook piece 340 performs only up-down motion.

It may be understood that the sliding portion 331 may be located at a side of the swing bar 330, and the sliding portion 331 may project from a surface of a main body of the swing bar 330 to a side. Exemplarily, a cross section of a swing portion may be a circle, and a diameter of the swing portion may be equal to or less than a width of the sliding slot 341. The cross section of the swing may alternatively be a square shape or another shape, and the swing portion may be rotationally connected with a main structure of the swing bar 330. A specific shape of the swing portion is not limited in the embodiments of the present disclosure.

Exemplarily, the swing portion can be integrated with the main structure of the swing bar 330 to reduce manufacturing costs.

Exemplarily, the swing portion may have a structure of a roller, and the swing portion is rotationally connected with the main structure of the swing bar 330. When the swing portion moves along the sliding slot 341, the roller may roll along a wall of the sliding slot 341, thereby reducing friction between the swing portion and the sliding slot 341, improving smoothness of moving the swing portion along the sliding slot 341, and reducing wear of the swing portion and the sliding slot 341.

In some embodiments, the housing 310 has a guide slot 311. The hook piece 340 is at least partially disposed through the guide slot 311. The two hook pieces 340 may move along the guide slot 311, so that the two hook pieces 340 retract into the housing 310, or at least one of the two hook pieces 340 partially extends out of the housing 310.

It may be understood that the guide slot 311 communicates with inner and outer sides of the housing 310. When the swing bar 330 rotates, the swing bar 330 may push the hook piece 340 to move along the guide slot 311. The guide slot 311 may provide position limiting and guidance for the movement of the hook piece 340, thereby improving smoothness and certainty of the movement of the hook piece 340.

In some embodiments, the hook piece 340 may include a connection portion 342 and a hook portion 343. The connection portion 342 is connected to the hook portion 343, and the sliding slot 341 is disposed at the connection portion 342. The hook portion 343 is disposed through the guide slot 311, and an outer side of the container 20 has a catching slot 21. When the hook piece 340 is connected to the container 20, the hook portion 343 is at least partially inserted into the catching slot 21, thereby improving reliability of connecting the hook piece 340 to the container 20.

It may be understood that, when the hook piece 340 drags the container 20 to move, the hook piece 340 is abutted with the wall of the catching slot 21, thereby improving reliability when the hook piece 340 is abutted with the container 20, and preventing the hook piece 340 from falling off when the container 20 is dragged to move.

Exemplarily, the guide slot 311 may be disposed at the top of the housing 310, and the hook piece 340 may move in a vertical direction. When the hook piece 340 is retracted along the guide slot 311 relative to the housing 310, a top surface of the hook portion 343 may be lower than the top surface of the housing 310 or be flush with the top surface of the housing 310. When the hook piece 340 extends along the guide slot 311 relative to the housing 310, the hook portion 343 at least partially projects to an outer side of the top of the housing 310. The hook portion 343 forms a protrusion structure on the outer side of the top of the housing 310, and a portion of the hook portion 343 projecting to the outer side of the top of the housing 310 may be abutted with and cooperate with the catching slot 21 of the container 20.

In some embodiments, there are at least two hook portions 343, and the at least two hook portions 343 are distributed at an interval along a length direction of the connection portion 342. In this way, the container 20 may be simultaneously connected to multiple hook portions 343, thereby improving balance of force-bearing on the container 20 when the hook piece 340 is connected to the container 20.

The number of the hook portions 343 of each hook piece 340 may be two, three, or more. This is not specifically limited in the embodiments of the present disclosure.

Exemplarily, there are two hook portions 343, and the two hook portions 343 are connected at two ends of the connection portion 342. The connection portion 342 is horizontally disposed. The two hook portions 343 may be vertically disposed, and top surfaces of the two hook portions 343 may be disposed in flush with each other, to ensure that when the swing bar 330 drives the hook piece 340 to move, the two hook portions 343 may be synchronously inserted into or separated from the catching slot 21 of the container 20.

Exemplarily, the hook portion 343 can be integrated with the connection portion 342, or the hook portion 343 and the connection portion 342 may be connected by means of soldering, or the hook portion 343 and the connection portion 342 may be detachably connected by using a fastener such as a bolt. A specific connection manner of the hook portion 343 and the connection portion 342 is not limited in the embodiments of the present disclosure.

In some embodiments, a position limiting protrusion 312 may be provided on a side wall of the guide slot 311, and a groove 3431 is provided on a side wall of the hook portion 343. The position limiting protrusion 312 may cooperate with the groove 3431. When the hook portion 343 moves along the guide slot 311, the position limiting protrusion 312 is located in the groove 3431.

It may be understood that, cooperation of the position limiting protrusion 312 and the groove 3431 can improve cooperation closeness of the hook portion 343 and the guide slot 311, and can avoid shaking when the hook portion 343 moves along the guide slot 311.

Exemplarily, the position limiting protrusion 312 may be disposed on each of walls on two opposite sides of the guide slot 311, and the groove 3431 may be separately disposed on each of two opposite sides of the hook portion 343. The two position limiting protrusions 312 respectively cooperate with the two grooves 3431 respectively. A cross section of the guide slot 311 and a cross section of the hook portion 343 may both have a shape of "I".

Exemplarily, the materials of the hook piece 340 may be plastics, metal such as iron or aluminum, or alloy materials. This is not specifically limited in the embodiments of the present disclosure.

In some embodiments, a movement direction of the hook piece 340 may be a second direction, and the second direction is the vertical direction. A rotation plane of the swing bar 330 may be perpendicular to a picking and placing direction of the picking and placing device 10. When the hook piece 340 is separated from the catching slot 21 of the container 20, the hook piece 340 is stowed relative to the housing 310. In this case, the hook piece 340 is accommodated in the housing 310, and a height of the hook piece 340 in the second direction is lower than a top surface of the housing 310. When the hook piece 340 is abutted with the catching slot 21 of the container 20, the hook piece 340 may extend relative to the housing 310. In this case, the hook piece 340 gets out of the top surface of the housing 310.

In some embodiments, the catching slot 21 may be disposed on a bottom wall of the container 20, or the catching slot 21 may be formed by a handle at an end side of the container 20. A specific disposition position of the catching slot 21 is not limited in the embodiments of the present disclosure. For example, the catching slot 21 may be disposed on a top of a side wall of the container 20 facing the picking and placing device 10, and an opening of the catching slot 21 is disposed upward. When the hook mechanism 300 is aligned with the catching slot 21, the hook piece 340 is located above the catching slot 21. When the hook piece 340 needs to be abutted with the catching slot 21, the first driving unit 321 may drive the hook piece 340 to move downward. When being at the bottom or the top of the container 20, the catching slot 21 may be disposed close to a bottom edge of the container 20, so that the hook mechanism 300 can be abutted with the container 20 at a port position of a rack without extending into a rack storage location. In this way, during a process of picking and placing the container 20, the hook mechanism 300 does not occupy inner space of the storage location, which is beneficial to improving warehouse density of the rack.

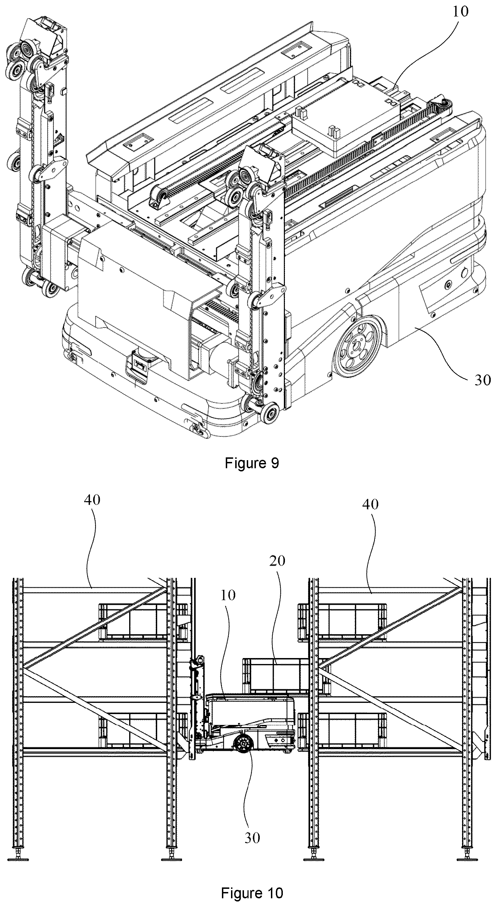

Referring to FIG. 9, when the container 20 is placed on the rack, an end of the container 20 projects beyond a cross beam of the rack by a distance, so that the catching slot 21 at the bottom of the container 20 may be exposed outside the port. In this way, when the hook piece 340 is abutted with the catching slot 21, the hook piece 340 does not interfere with the cross beam of the rack.

It should be noted that, when the hook piece 340 is opposite to the catching slot 21 of the container 20, because the hook piece 340 does not interfere with the container 20 in the retracted state, in a process in which the hook mechanism 300 extends below the container 20, the hook mechanism 300 may be close to a bottom wall of the container 20 as much as possible, thereby avoiding that the hook mechanism 300 and a telescopic mechanism 200 occupy too much space below the storage location at which the target container 20 is located, thereby helping reduce a shelf height of the rack storage location and improving warehouse density.

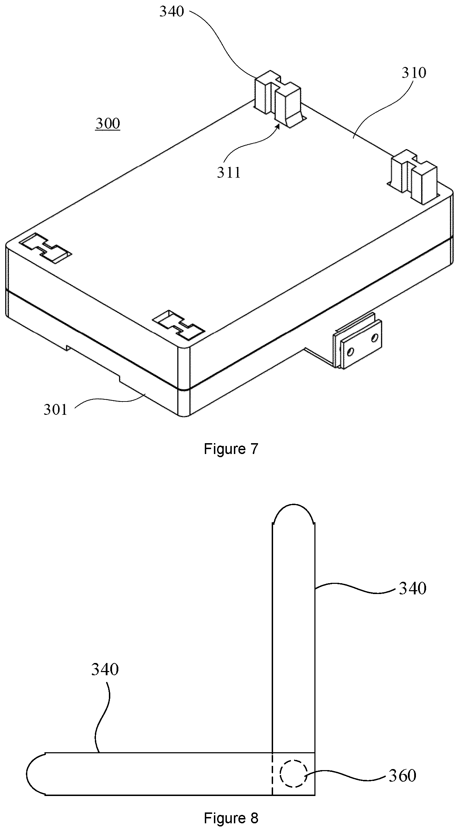

FIG. 6 is a second schematic structural diagram of a hook mechanism in a picking and placing device according to an embodiment of the present disclosure. FIG. 7 is a third schematic structural diagram of a hook mechanism in a picking and placing device according to an embodiment of the present disclosure.

Referring to FIG. 3 to FIG. 7, in some embodiments, there may be two swing bars 330, and the two swing bars 330 are respectively disposed corresponding to the two hook pieces 340.

The two swing bars 330 are connected at two ends of the driving axis 322, and projections of the two swing bars 330 on a plane perpendicular to the first direction have an angle. The driving axis 322 extends along the first direction.

In a process in which the swing bar 330 rotates for a cycle, a movement travel of the hook piece 340 cooperating with the swing bar 330 includes two processes, namely, upward extension and downward retraction. Because the two swing bars 330 have the angle, movement travels of the two hook pieces 340 corresponding to the two swing bars 330 are staggered. When the driving component 320 drives the two swing bars 330 to rotate, the two hook pieces 340 have different telescopic positions relative to the housing 310, thereby meeting a requirement of connection between the hook piece 340 and the container 20 when goods are picked and placed in different directions.

A specific value of the angle between the projections of the two swing bars 330 along the rotation axis direction thereof may be 30°, 60°, 90°, 120°, 150°, 180°, or the like. This is not specifically limited in the embodiments of the present disclosure.

Exemplarily, the angle of the projections of the two swing bars 330 on the plane perpendicular to the first direction may be 90°. That is, the angle of the projections of the two swing bars 330 along the first direction is 90°.

For example, the angle of the projections of the two swing bars 330 along the rotation axis direction thereof is 90°. In a 360-degree rotation travel in which the swing bars 330 rotate for one cycle, the travel may be divided into four travel ranges. The four travel ranges respectively correspond to four states of the two hook pieces 340. The four states are respectively: the two hook pieces 340 are both retracted relative to the housing 310; the two hook pieces 340 both extend relative to the housing 310; a first one of the two hook pieces 340 extended relative to the housing 310 and a second one is retracted relative to the housing 310; and the second one of the two hook pieces 340 extend relative to the housing 310 and the first one is retracted relative to the housing 310.

It may be understood that, in the embodiments of the present disclosure, the picking and placing device 10 may perform a bidirectional picking and placing operation from two ends of its length direction. As shown in FIG. 3, when the hook piece 340 needs to be separated from the container 20, the two swing bars 330 may be rotated, so that the two hook pieces 340 are both in a state of being retracted relative to the housing 310. As shown in FIG. 6 and FIG. 7, when the hook piece 340 needs to abutted with the container 20, the two swing bars 330 may be rotated according to a specific picking and placing direction of the picking and placing device 10. In this way, one of the two hook pieces 340 is in an extended state relative to the housing 310 and the other of the two hook pieces 340 is in a retracted state relative to the housing 310. The two hook pieces 340 respectively correspond to two directions of bidirectional picking and placing of the picking and placing device 10.

Exemplarily, when the telescopic mechanism 200 extends from the first end of the device body 100 in the length direction to pick and place goods, one hook piece 340 of the two hook pieces 340 that faces the first end of the device body 100 is configured to be abutted with the container 20. When the telescopic mechanism 200 extends from the second end of the device body 100 in the length direction to pick and place goods, one hook piece 340 of the two hook pieces 340 that faces the second end of the device body 100 is configured to be abutted with the container 20. In this way, a travel of the hook mechanism 300 to drive the container 20 to move may be increased, and interference between the hook mechanism 300 and the rack 40 may be avoided.

It should be noted that catching slots 21 may be respectively provided at two ends of the bottom of the container 20. In this way, when the picking and placing device 10 performs the picking and placing operation on the container 20 in different directions, a corresponding hook piece 340 may be abutted with the catching slots 21 at different positions of the bottom of the container 20.

FIG. 8 is a schematic structural diagram of another hook mechanism according to an embodiment of the present disclosure.

Referring to FIG. 8, in some embodiments, the driving component 320 includes a first driving unit 321 and a rotation axis 360, and the first driving unit 321 is configured to drive the rotation axis 360 to rotate. The rotation axis 360 extends along the first direction. The two hook pieces 340 are fixedly connected to two ends of the rotation axis 360. Projections of the two hook pieces 340 on the plane perpendicular to the first direction extend along different directions.

It may be understood that the rotation axis 360 may directly drive the two hook pieces 340 to rotate. Exemplarily, the two hook pieces 340 may be perpendicular to the rotation axis 360, and the two hook pieces 340 extend in opposite directions. When the hook pieces 340 are abutted with the container, one of the hook pieces 340 faces upward, and the other of the hook pieces 340 faces downward. When the hook pieces 340 are separated from the container, the two hook pieces 340 are both horizontally disposed.

In some embodiments, the angle of the projections of the two hook pieces 340 on the plane perpendicular to the first direction is 60°-180°. Exemplarily, the angle of the projections of the two hook pieces 340 on the plane perpendicular to the first direction is 60°, 61°, 70°, 90°, 120°, 150°, 170°, 179°, 180°, or the like. This is not specifically limited in the embodiments of the present disclosure.

The following describes a specific structure of the driving component 320 in detail.

Still referring to FIG. 1 to FIG. 5, in a possible implementation, the driving component 320 may include a first driving unit 321 and a driving axis 322. The first driving unit 321 is disposed in the housing 310, and the driving axis 322 is in a rotation connection with the housing 310. The first driving unit 321 is configured to drive the driving axis 322 to rotate. The two swing bars 330 are both connected to the driving axis 322, so that the multiple hook pieces 340 may be driven through the driving axis 322 to cooperate with each other, thereby simplifying a driving structure of the hook mechanism 300.

It may be understood that, the two hook pieces 340 are arranged at an interval along the first direction, the driving axis 322 extends along the first direction, and the two swing bars 330 may be respectively connected at two ends of the driving axis 322. The two swing bars 330 are relatively fixed to the driving axis 322, so that the angle of the projections of the two swing bars 330 in the length direction of the driving axis 322 keeps unchanged, to ensure stability of rotation travels of the two swing bars 330.

Exemplarily, the driving component 320 may further include a first gear 323 and a second gear 324. The first gear 323 is connected to an output end of the first driving unit 321. The second gear 324 is coaxially connected to the driving axis 322. The first gear 323 is in mesh with the second gear 324, so that layout compactness of the driving component 320 can be improved and space occupation can be reduced.

It should be noted that, the first driving unit 321 may be a motor. The first driving unit 321 may be disposed on a side of the driving axis 322. A support bearing 325 may be disposed on the driving axis 322. An inner ring of the support bearing 325 is connected to the driving axis 322, and an outer ring of the support bearing 325 is connected to a bearing pedestal on the housing 310, to improve rotation stability of the driving axis 322 and provide support for the driving axis 322.

An embodiment of the present disclosure provides a picking and placing device 10. The picking and placing device 10 is configured to pick and place a container 20. The picking and placing device 10 may be applied to a robot in a warehouse logistics system, to obtain the container 20 from a rack, or place the container 20 on the rack.

The picking and placing device 10 provided in the present disclosure includes a device body 100, a telescopic mechanism 200, and a hook mechanism 300. The telescopic mechanism 200 is in a movable connection to the device body 100, and the hook mechanism 300 is in a movable connection to the telescopic mechanism 200. When a picking and placing operation is performed, the telescopic mechanism 200 may extend or retract relative to the device body 100, the hook mechanism 300 may move relative to the telescopic mechanism 200, and the hook mechanism 300 may be abutted with the container 20 and drive the container 20 to move. A structure of the hook mechanism 300 is any one provided in the embodiments of the present disclosure, and details are not described herein again.

It should be noted that, in the picking and placing device 10 provided in the embodiments of the present disclosure, the hook mechanism 300 that is movable is disposed on the telescopic mechanism 200, and the hook mechanism 300 does not need to extend to the deep interior of the storage location when being abutted with the container 20, thereby avoiding occupying space inside the storage location. It is beneficial to reducing a width and a shelf height of the storage location of the rack, and improving warehouse density of the rack.

In addition, the retractable hook piece 340 is used to cooperate with the container 20, thereby simplifying a structure of connecting the picking and placing device 10 with the container 20, reducing a weight of the picking and placing device 10, and reducing production costs.

In the embodiments of the present disclosure, a picking and placing direction of the picking and placing device 10 is defined as an X direction, that is, the first direction is the X direction. The telescopic mechanism 200 may move along the X direction relative to the device body 100, and the hook mechanism 300 may move along the X direction relative to the telescopic mechanism 200. A length direction of the device body 100 is the X direction. A width direction of the device body 100 is a Y direction. A height direction of the device body 100 is a Z direction. The Y direction is perpendicular to the X direction, the Z direction is perpendicular to the XY plane, and the second direction is the Z direction.

Specific driving and transmission structures of movement of the telescopic mechanism 200 and the hook mechanism 300 are described in detail below.

In a possible implementation, the device body 100 may include a fixed base plate 110, a first transmission piece 120, a first transmission wheel 130, a driving wheel 140, and a second driving unit 150. The second driving unit 150 is disposed on the fixed base plate 110. There are at least two first transmission wheels 130. The at least two first transmission wheels 130 are respectively disposed at two ends of the fixed base plate 110 along a moving direction of the telescopic mechanism 200. The driving wheel 140 is connected to an output end of the second driving unit 150. The first transmission piece 120 is sequentially disposed around the first transmission wheel 130 and the driving wheel 140 that are at the two ends of the fixed base plate 110.

The telescopic mechanism 200 is connected to the first transmission piece 120. The second driving unit 150 is configured to drive the driving wheel 140 to rotate, and the driving wheel 140 drives the first transmission piece 120 to perform transmission. In this way, the first transmission piece 120 drives the telescopic mechanism 200 to move relative to the fixed base plate 110, thereby implementing bidirectional telescopic movement of the telescopic mechanism 200 relative to the device body 100.

It may be understood that, there are two first transmission wheels 130, and the two first transmission wheels 130 are rotatably disposed on the two ends of the fixed base plate 110 in the X direction. The first transmission piece 120 is a flexible transmission piece such as a chain or a belt. The driving wheel 140 may be engaged with an inner side of the first transmission piece 120. When the second driving unit 150 drives the driving wheel 140 to rotate, the driving wheel 140 may drive the first transmission piece 120 to perform transmission in the X direction, and the first transmission piece 120 may drive the telescopic mechanism 200 to move.

Exemplarily, the driving wheel 140 may rotate clockwise or anticlockwise. Correspondingly, the first transmission piece 120 may perform transmission in a forward direction or a reverse direction, and the telescopic mechanism 200 may move in a bidirectional direction along the X direction.

Exemplarily, the first driving unit 321 may be a motor. The first driving unit 321 may be disposed below the fixed base plate 110, to fully use space below the fixed base plate 110, and prevent the first driving unit 321 from interfering with the fixed base plate 110. The device body 100 may further be provided with a guide wheel 170. Exemplarily, there are two guide wheels 170. The two guide wheels 170 are located at two sides of the driving wheel 140, and the two guide wheels 170 abut against an outer side of the first transmission piece 120. The guide wheel 170 may provide a guiding function for transmission of the first transmission piece 120.

In some embodiments, the telescopic mechanism 200 may include a telescopic piece 210, a second transmission piece 220, and at least two second transmission wheels 230. The at least two second transmission wheels 230 are respectively disposed at two ends of the telescopic piece 210 in a moving direction of the hook mechanism 300, and the second transmission piece 220 is disposed around the at least two second transmission wheels 230.

The second transmission piece 220 has a connection point to the fixed base plate 110. The hook mechanism 300 is connected to the second transmission piece 220. A connection position between the hook mechanism 300 and the second transmission piece 220 and a connection position between the fixed base plate 110 and the second transmission piece 220 are respectively located at opposite sides of the second transmission piece 220.

It may be understood that, the telescopic piece 210 is connected to the first transmission piece 120. When the first transmission piece 120 performs transmission under driving of the second driving unit 150, the telescopic piece 210 moves along the X direction. In this case, because the second transmission piece 220 is connected to the fixed base plate 110, the second transmission piece 220 performs transmission around the second transmission wheel 230, to drive the hook mechanism 300 to generate relative movement relative to the telescopic piece 210. Therefore, the hook mechanism 300 cooperates with the telescopic mechanism 200 and is driven by telescopic movement of the telescopic mechanism 200, thereby simplifying a driving structure of the picking and placing device 10, and reducing the weight and costs of the picking and placing device 10.

It should be noted that, in the embodiments of the present disclosure, a single driving source is used to implement two-level transmission of the telescopic mechanism 200 relative to the device body 100 and the hook mechanism 300 relative to the telescopic mechanism 200. The fixed base plate 110 is used as a reference, the moving speed of the telescopic piece 210 relative to the fixed base plate 110 is v, and the moving travel is L. Therefore, the moving speed of the hook mechanism 300 relative to the fixed base plate 110 is 2v, and the moving travel is 2L.

In some embodiments, a connection point between the hook mechanism 300 and the second transmission piece 220 is located between two hook pieces 340, so that the hook mechanism 300 may partially extend beyond a length of the telescopic mechanism 200, to facilitate connection with the catching slot 21.

It may be understood that during picking and placing, the catching slot 21 can be prevented from getting out of a cross beam of a rack too much, thereby preventing the container 20 placed at a position on the rack from getting out of the cross beam too much, improving stability of placing the container 20 on the rack, and avoiding interference between the container 20 and an externally moving object.

In some embodiments, the first transmission piece 120 and the first transmission wheel 130 may be located on a first side in the width direction of the picking and placing device 10. The second transmission piece 220 and the second transmission wheel 230 may be located on a second side in the width direction of the picking and placing device 10. A side of the carrier 301 facing the second transmission piece 220 is provided with the connection piece 350, and the connection piece 350 is connected to the second transmission piece 220. In this way, space of two sides of the picking and placing device 10 can be fully used, thereby improving reasonableness of the layout of the transmission structure.

It may be understood that, the connection piece 350 may extend from the housing 310 to a side of the telescopic piece 210, and the connection piece 350 may be fixedly connected to the second transmission piece 220 by using a screw or a rivet. The telescopic piece 210 may also be connected to the first transmission piece 120 by using a fastener such as a screw or a rivet.

Exemplarily, when the telescopic mechanism 200 is in an initial state, that is, when the telescopic mechanism 200 is in a retracted state relative to the device body 100, the hook piece 340 may be located at a middle position of the telescopic piece 210 along the X direction. In this case, a connection position between the telescopic piece 210 and the first transmission piece 120 may be located at a middle portion of the fixed base plate 110 along the X direction, and a connection position between the second transmission piece 220 and the fixed base plate 110 may be located at the middle portion of the fixed base plate 110 along the X direction. In this way, it can be ensured that the telescopic mechanism 200 and the hook mechanism 300 both have sufficient movement travels in a bidirectional picking and placing process of the picking and placing device 10.

In some embodiments, the picking and placing device 10 may further include a first guide track 160 and a first sliding block. The first guide track 160 is disposed on the fixed base plate 110. The first sliding block is connected to the telescopic piece 210, and the first sliding block is in sliding connection with the first guide track 160, to improve smoothness of movement of the telescopic mechanism 200 relative to the device body 100.

Exemplarily, there may be two first guide tracks 160. The two first guide tracks 160 may be parallel and are respectively disposed on opposite sides of the device body 100. The first sliding block may be disposed at each of two opposite sides of the bottom of the telescopic piece 210, and at least one first sliding block is disposed at each side and is in sliding cooperation with the first guide track 160.

In some embodiments, the picking and placing device 10 may further include a second guide track 240 and a second sliding block. The second guide track 240 is disposed at the telescopic piece 210. The second sliding block is connected to the housing 310, and the second sliding block is in sliding connection with the second guide track 240, thereby improving smoothness of movement of the hook mechanism 300 relative to the telescopic mechanism 200.

Exemplarily, the second guide track 240 may be disposed at the middle portion of the telescopic piece 210, and extend along the X direction. The second guide track 240 may be located between the two first guide tracks 160, and is parallel to the first guide track 160. The second sliding block may be connected to the bottom of the housing 310 of the hook mechanism 300.

It should be noted that the device body 100 may further be provided with a first detection module and a second detection module. The first detection module may detect a position of the container 20 relative to the device body 100, to determine whether the container 20 has been completely picked and placed to a tray of the device body 100, or whether the container 20 has been completely removed from the device body 100. The second detection module is configured to detect a height position of the picking and placing device 10 relative to the rack, to ensure that the picking and placing device 10 is opposite to a target storage location at which the container 20 needs to be picked and placed. The first detection module and the second detection module may both be photoelectric sensors, infrared sensors, visual sensors, or the like. This is not specifically limited in the embodiments of the present disclosure.

FIG. 9 is a schematic structural diagram of a robot according to an embodiment of the present disclosure.

Referring to FIG. 9, an embodiment of the present disclosure provides a robot. The robot includes a robot body 30 and the picking and placing device 10 in the foregoing technical solution. The picking and placing device 10 is connected to the robot body 30.

The robot body 30 may move along the ground, and the picking and placing device 10 may be disposed at the top of the robot body 30. The robot provided in the embodiments of the present disclosure may include all technical solutions and technical effects of the foregoing picking and placing device 10. Details are not described herein again.

FIG. 10 is a schematic structural diagram of a warehouse system according to an embodiment of the present disclosure.

Referring to FIG. 10, an embodiment of the present disclosure provides a warehouse system. The warehouse system includes a rack 40 and the robot in the foregoing technical solution. The robot is configured to move along the ground. The robot is configured to be abutted with the rack 40, and climb and move along a height direction of the rack 40.

The robot is configured to move along the ground, or the robot is configured to be abutted with the rack 40, and climb and move along the height direction of the rack 40. In this way, the picking and placing device 10 can be opposite to different storage locations of the rack 40, to obtain the target container 20. The picking and placing device 10 may perform a picking and placing operation on the container 20 after being abutted with a corresponding storage location of the rack 40.

The warehouse system provided in the embodiments of the present disclosure may include all technical solutions and technical effects of the foregoing picking and placing device 10. Details are not described herein again.

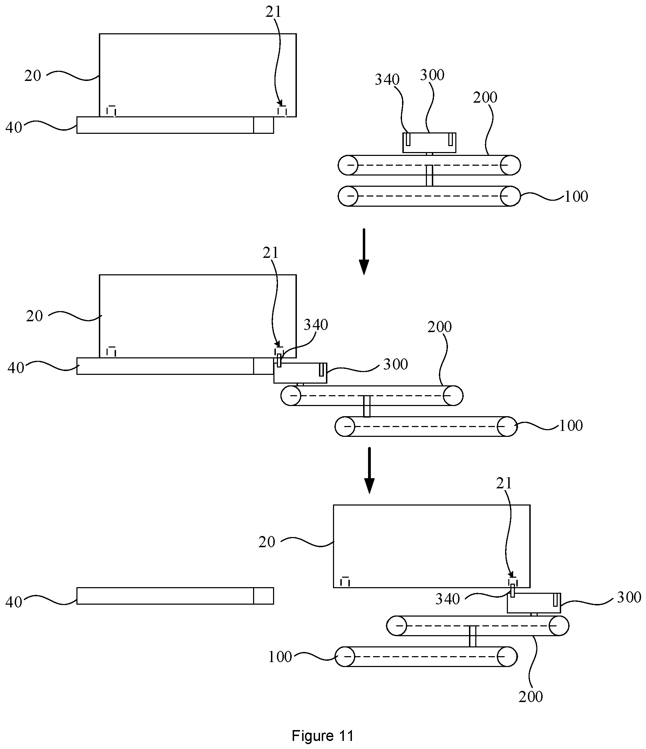

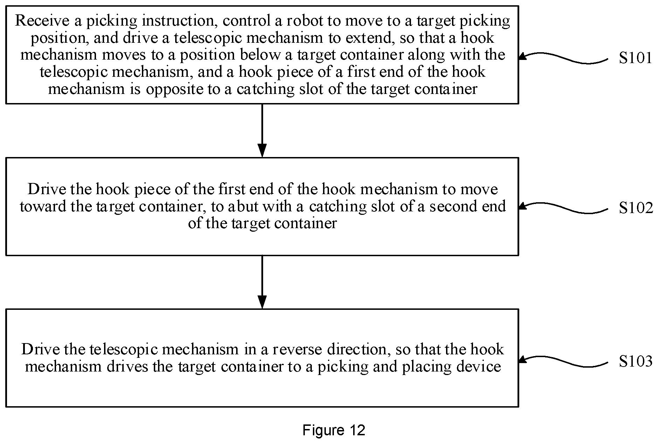

FIG. 11 is a schematic diagram of a picking process of a picking and placing device according to an embodiment of the present disclosure. FIG. 12 is a flowchart of a picking method according to an embodiment of the present disclosure.

Referring to FIG. 11 and FIG. 12, an embodiment of the present disclosure provides a picking and placing method applied to a robot. The robot includes a picking and placing device 10, a receiver (receiver), a processor (processor), and a memory (memory). The picking and placing device 10 includes a device body 100, a telescopic mechanism 200, and a hook mechanism 300. The hook mechanism 300 is disposed on the telescopic mechanism 200 and is retractable relative to the device body. The hook mechanism 300 includes a carrier 301, a driving component 320, and two hook pieces 340. The driving component 320 is disposed on the carrier 301. The two hook pieces 340 are disposed at two ends of the driving component 320 at an interval along the first direction. The driving component 320 is configured to drive the two hook pieces 340 to move asynchronously so as to be respectively raised or lowered relative to the carrier 301. The robot is configured to obtain a container 20, and two ends of a bottom side of the container 20 have catching slots 21. The memory stores computer executable program codes (computer executable program codes) for executing various tasks. After the receiver receives instructions sent by a server, the processor executes the program codes, to control the robot and various execution mechanisms (for example, the picking and placing device 10) of the robot to perform corresponding actions.

In an embodiment, the picking and placing method includes:
S101. Receive a picking instruction, control the robot to move to a target picking position, and drive the telescopic mechanism 200 to extend, so that the hook mechanism 300 moves to a position below a target container 20 along with the telescopic mechanism 200, and the hook piece of a first end of the hook mechanism is opposite to a catching slot 21 of the target container 20.

The first end of the hook mechanism is an end close to the target picking location. The hook mechanism 300 may cooperate with the telescopic mechanism 200. That is, when the telescopic mechanism 200 extends, the hook mechanism 300 may move relative to the telescopic mechanism 200 at the same time, so that the hook mechanism 300 may move to an end of the telescopic mechanism 200, and the hook mechanism 300 may move to a bottom edge of the container 20.

It should be noted that in a process in which the telescopic mechanism 200 and the hook mechanism 300 move toward the target container 20, both the front and rear hook pieces 340 of the hook mechanism 300 are in a low or retracted state, to avoid interference with the container 20.

S102. Drive the hook piece 340 of the first end of the hook mechanism 300 to move toward the target container 20, to abut with the catching slot 21 of a second end of the target container 20.

The second end of the target container 20 is an end close to an opening side of the target picking position, that is, a side of the target container 20 facing the robot. An opening of the catching slot 21 of the target container 20 faces downward. By rotating the swing bar 330, the swing bar 330 pushes the hook piece 340 to move upward, so that the hook piece 340 may be inserted into the catching slot 21.

It should be noted that, the hook mechanism 300 has two front and rear hook pieces 340. When the telescopic mechanism 200 extends, and the hook mechanism 300 reaches a preset position relative to the container 20, the hook piece 340 located at a front end in an extended direction of the telescopic mechanism 200 is located below the catching slot 21. With the rotation of the swing bar 330, the hook piece 340 may move upward to extend to abut with the catching slot 21, and the hook piece 340 located at a rear end is still in a retracted state. For a specific implementation structure, refer to the foregoing hook mechanism 300, and details are not described herein again.

S103. Drive the telescopic mechanism 200 in a reverse direction, so that the hook mechanism 300 drives the target container 20 to the picking and placing device 10.

In a process in which the hook mechanism 300 drives the target container 20 to the picking and placing device 10, a position of the hook piece 340 keeps unchanged, and the telescopic mechanism 200 and the hook mechanism 300 move at the same time.

It should be noted that when the telescopic mechanism 200 is retracted to an initial state, the target container 20 has not been completely moved to a tray of the picking and placing device 10. Therefore, after the telescopic mechanism 200 is retracted to the initial state, the telescopic mechanism 200 needs to be driven to continue to move for a certain distance, that is, the telescopic mechanism 200 extends in a reverse direction for a certain distance. In this process, the hook mechanism 300 may move to an end of the telescopic mechanism 200 facing away from a picking and placing direction, to completely drive the target container 20 to the tray of the picking and placing device 10.

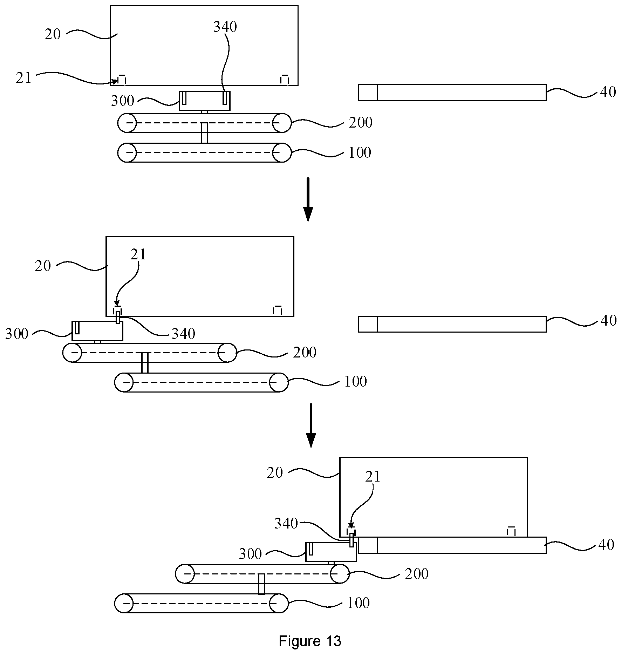

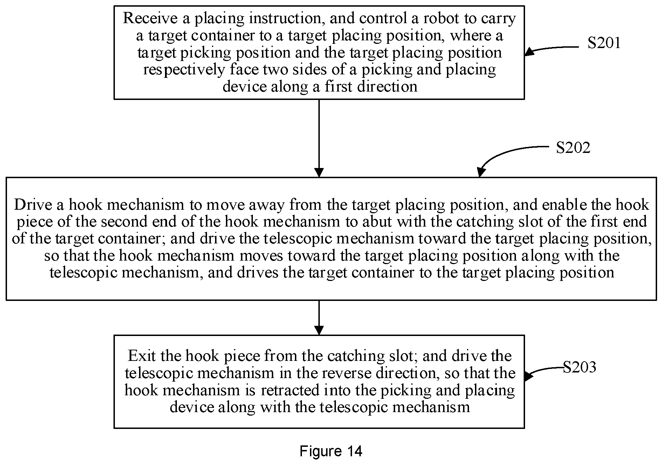

FIG. 13 is a schematic diagram of a placing process of a picking and placing device according to an embodiment of the present disclosure. FIG. 14 is a flowchart of a placing method according to an embodiment of the present disclosure.

Referring to FIG. 13 and FIG. 14, in an embodiment, the picking and placing method further includes:

S201. Receive a placing instruction, and control the robot to carry the target container 20 to a target placing position, where the target picking position and the target placing position respectively face two sides of the picking and placing device along the first direction.

The hook mechanism 300 has two front and rear hook pieces 340. With reference to a placing direction, the hook piece 340 of the hook mechanism 300, located at a front end along the placing direction, may be opposite to the catching slot 21.

It may be understood that before the hook mechanism 300 is driven toward the target placing position, whether the placing direction of the target container 20 and the picking direction of the target container are on a same side needs to be determined. If the placing direction and the picking direction are on the same side, the target container 20 is picked and placed on the same side. When the target container is picked and placed on the same side, a same hook piece 340 during picking may be used for connection with the target container 20. If the placing direction and the picking direction are not on the same side, the target container 20 is picked and placed on different sides. When the target container is picked and placed on the different sides, another hook piece 340 different from that used during picking may be used for connection with the target container 20.

S202. Drive the hook mechanism 300 to move away from the target placing position, and enable the hook piece 340 of the second end of the hook mechanism 300 to abut with the catching slot 21 of the first end of the target container 20; drive the telescopic mechanism 200 toward the target placing position, so that the hook mechanism 300 moves toward the target placing position along with the telescopic mechanism 200, and drives the target container 20 to the target placing position.

It may be understood that, in the foregoing process of picking goods, the hook mechanism 300 is abutted with the second end of the target container 20, and needs to be abutted with the first end of the target container 20 during placing goods. Therefore, the hook mechanism 300 needs to move from one end of the telescopic mechanism 200 to the other end. Before the hook piece 340 that is moved to the second end of the hook mechanism 300 is opposite to the catching slot 21 of the first end of the target container 20, the two hook pieces 340 both remain in a low or retracted state.

It may be understood that, the hook piece 340 of the second end of the hook mechanism 300 is abutted with the catching slot 21 of the first end of the target container 20. That is, of the two hook pieces 340, the hook piece 340 of the front end of the hook mechanism 300 in the placing direction extends upward under driving of the swing bar 330, and is abutted with the catching slot 21 of the rear end of the target container 20 in the placing direction. However, the hook piece 340 of the rear end in the placing direction is still in the retracted state.

S203. Exit the hook piece 340 from the catching slot 21; and drive the telescopic mechanism 200 in the reverse direction, so that the hook mechanism 300 is retracted into the picking and placing device 10 along with the telescopic mechanism 200.

It may be understood that, in a process in which the telescopic mechanism 200 and the hook mechanism 300 are retracted, the two hook pieces 340 of the hook mechanism 300 are both in the retracted state. The telescopic mechanism 200 and the hook mechanism 300 may move at the same time until the telescopic mechanism 200 returns to the initial state.

It should be noted that step numbers in the present disclosure are merely used for specifically describing the embodiments, and do not necessarily represent a strict sequence between the steps. A sequence between multiple steps or a sequence of actions within multiple steps may be randomly adjusted when the objective of the present disclosure can be achieved.

It should be noted that the method is a placing method for the robot. When the target container 20 is picked and placed on a same side, the placing method is a reverse process of the foregoing picking method, and details are not described herein again.

In addition, the foregoing placing method and picking method may be implemented one after another. For example, a container 20 is first obtained from a rack by using the foregoing picking method, and then the container 20 is placed on the rack by using the foregoing placing method. Alternatively, a container 20 is first placed on a rack by using the foregoing placing method, and then the container 20 is obtained from the rack by using the foregoing picking method.

For example, the warehouse system includes two oppositely disposed racks. The robot picks and places goods in a lane between the two racks. A first storage location and a second storage location are two storage locations that are oppositely disposed on the two racks. The robot obtains a container 20 at the first storage location by using the picking method, and then continues to place the container 20 at the second storage location by using the placing method without rotating or lifting. In this way, a position of the container 20 can be adjusted conveniently, an action is simple, and a process is quick.

It should be noted that the picking and placing device 10 mentioned in the foregoing picking method and/or placing method may be any one or a combination of several types of the picking and placing devices 10 provided in the embodiments of the present disclosure, as long as the picking and placing device 10 includes a structure necessary for implementing the foregoing picking method and/or placing method.

Finally, it should be noted that the foregoing embodiments are merely used for describing the technical solutions of the present disclosure, but are not intended to limit the technical solutions of the present disclosure. Although the present disclosure is described in detail with reference to the foregoing embodiments, persons of ordinary skill in the art should understand that they may still make modifications to the technical solutions described in the foregoing embodiments, or make equivalent replacements to some or all technical features thereof. These modifications or replacements do not cause the essence of corresponding technical solutions to depart from the scope of the technical solutions of the embodiments of the present disclosure.

## Claims

1. A hook mechanism (300), wherein the hook mechanism (300) is used for picking and placing a container (20),
the hook mechanism (300) comprises a carrier (301), a driving component (320), and two hook pieces (340), the driving component (320) is disposed on the carrier (301), and the two hook pieces (340) are disposed at two ends of the driving component (320) at an interval along a first direction; and the driving component (320) is configured to simultaneously drive the two hook pieces (340) to move asynchronously so as to be respectively raised or lowered relative to the carrier (301).

2. The hook mechanism (300) according to claim 1, wherein the hook mechanism (300) further comprises a swing bar (330), the swing bar (330) is fixedly connected to an output end of the driving component (320), the hook piece (340) has a sliding slot (341), and the swing bar (330) is at least partially located in the sliding slot (341); and the driving component (320) is configured to drive the swing bar (330) to rotate, so that the swing bar (330) drives the hook piece (340) to move.

3. The hook mechanism (300) according to claim 2, wherein the swing bar (330) has a sliding portion (331), the sliding portion (331) is inserted into the sliding slot (341), and the sliding portion (331) is spaced from a rotation center of the swing bar (330).

4. The hook mechanism (300) according to claim 2, wherein the hook mechanism (300) further comprises a housing (310), the housing (310) is disposed on the carrier (301), the driving component (320) and the two hook pieces (340) are disposed in the housing (310), the housing (310) has a guide slot (311), and the two hook pieces (340) are movable along the guide slot (311), so that the two hook pieces (340) are retracted into the housing (310), or at least one of the two hook pieces (340) partially extends out of the housing (310).

5. The hook mechanism (300) according to claim 3, wherein the hook piece (340) comprises a connection portion (342) and a hook portion (343); the connection portion (342) is connected to the hook portion (343), and the sliding slot (341) is disposed at the connection portion (342); the hook portion (343) is disposed through the guide slot (311); an outer side of the container (20) has a catching slot (21); and the hook portion (343) is at least partially inserted into the catching slot (21) when the hook piece (340) is abutted with the container (20).

6. The hook mechanism (300) according to claim 5, wherein there are at least two hook portions (343), and the at least two hook portions (343) are distributed at an interval along a length direction of the connection portion (342).

7. The hook mechanism (300) according to claim 5, wherein a side wall of the guide slot (311) has a position limiting protrusion (312), and a side wall of the hook portion (343) is provided with a groove (3431); and the position limiting protrusion (312) is located in the groove (3431) when the hook portion (343) moves along the guide slot (311).

8. The hook mechanism (300) according to claim 1, wherein the driving component (320) comprises a first driving unit (321) and a rotation axis (322), and the first driving unit (321) is configured to drive the rotation axis (322) to rotate; the rotation axis (322) extends along the first direction; the two hook pieces (343) are fixedly connected to two ends of the rotation axis (322); and projections of the two hook pieces (343) on a plane perpendicular to the first direction extend along different directions, and/or an angle between the projections of the two hook pieces (343) on the plane perpendicular to the first direction is 60°-180°.

9. The hook mechanism (300) according to any one of claims 2 to 7, wherein there are two swing bars (330), and the two swing bars (330) are respectively disposed corresponding to the two hook pieces (343).

10. The hook mechanism (300) according to claim 9, wherein the driving component (320) comprises a first driving unit (321) and a driving axis (322), the first driving unit (321) is disposed on the carrier (301), and the driving axis (322) extends along the first direction; the first driving unit (321) is configured to drive the driving axis (322) to rotate; and the two swing bars (330) are both fixedly connected to the driving axis (322), the two swing bars (330) are connected at two ends of the driving axis (322), and projections of the two swing bars (330) on a plane perpendicular to the first direction have an angle.

11. The hook mechanism (300) according to claim 10, wherein the angle of the projections of the two swing bars (330) on the plane perpendicular to the first direction is 90°.

12. The hook mechanism (300) according to claim 10, wherein the driving component (320) further comprises a first gear (323) and a second gear (324), the first gear (323) is connected to an output end of the first driving unit (321), and the second gear (324) is coaxially connected to the driving axis (322); and the first gear (323) is in mesh with the second gear (324).

13. A picking and placing device (10), wherein the picking and placing device (10) comprises a device body (100), a telescopic mechanism (200), and the hook mechanism (300) according to any one of claims 1 to 12, the telescopic mechanism (200) is disposed on the device body (100) and is telescopic relative to the device body (100) along a first direction, and the hook mechanism (300) is connected to the telescopic mechanism (200).

14. The picking and placing device (10) according to claim 13, wherein the device body (100) comprises a fixed base plate (110), a first transmission piece (120), a first transmission wheel (130), a driving wheel (140), and a second driving unit (150); the second driving unit (150) is disposed on the fixed base plate (110); and there are at least two first transmission wheels (130), the at least two first transmission wheels (130) are respectively disposed at two ends of the fixed base plate (110) along a moving direction of the telescopic mechanism (200), the driving wheel (140) is connected to an output end of the second driving unit (150), and the first transmission piece (120) is sequentially disposed around the first transmission wheel (130) and the driving wheel (140) that are at two ends of the fixed base plate (110); and
the telescopic mechanism (200) is connected to the first transmission piece (120), the second driving unit (150) is configured to drive the driving wheel (140) to rotate, and the driving wheel (140) drives the first transmission piece (120) to transmit, so that the first transmission piece (120) drives the telescopic mechanism (200) to move relative to the fixed base plate (110).

15. The picking and placing device (10) according to claim 14, wherein the telescopic mechanism (200) comprises a telescopic piece (210), a second transmission piece (220), and at least two second transmission wheels (230), and the at least two second transmission wheels (230) are respectively disposed at two ends of the telescopic piece (210) along a moving direction of the hook mechanism (300); and the second transmission piece (220) is disposed around the at least two second transmission wheels (230); and
the second transmission piece (220) has a connection point to the fixed base plate; the hook mechanism (300) is connected to the second transmission piece (220); and a connection location between the hook mechanism (300) and the second transmission piece (220) and a connection location between the fixed base plate (110) and the second transmission piece (220) are respectively located at opposite sides of the second transmission piece (220).
